# EUROPEAN PATENT APPLICATION

(11) **EP 4 706 938 A1**
(43) Date of publication of application: **11.03.2026**
(21) Application number: 25195360.0
(22) Date of filing: 12.08.2025
(51) Int. Cl.: B29C 49/06, B29C 49/12, B29C 49/42, B29C 49/02, B29L 31/00, B29C 49/64, B29C 49/78

(54) **METHOD FOR MOLDING HOLLOW MOLDED ARTICLE, AND STRETCHING ROD AND INJECTION STRETCH BLOW MOLDING MACHINE USED IN THE METHOD**

(30) Priority: 05.09.2024 JP 2024153471
(71) Applicant: AOKI TECHNICAL LABORATORY, INC., Hanishina-gun, Nagano 389-0603 (JP)
(72) Inventor: TAKEUCHI, Hideki, Nagano, 3890603 (JP); SHIMOGATA, Takashi, Nagano, 3890603 (JP); SAKAI, Osamu, Nagano, 3890603 (JP)
(74) Representative: Weickmann & Weickmann PartmbB

(57) **Abstract**

A method for molding a hollow molded article, which can suppress deformation of a preform and shorten a molding cycle of the hollow molded article, and a stretching rod and an injection stretch blow molding machine used in the method are provided. The method for molding a hollow molded article, includes: an injection molding process of injection molding a preform; and a blow molding process of obtaining a hollow molded article by stretch blow molding the preform in a blow molding section. The blow molding process includes a preform supporting step of inserting a distal end portion of a stretching rod into the preform and bringing the distal end portion into contact with the preform to support the preform, and a preform separation step of supplying blow air into the preform to release the contact between the preform and the distal end portion.

## Description

### Cross-reference to Related Applications

This application claims the priority benefit under 35 U.S.C. § 119 of Japanese Patent Application No. 2024-153471 filed on MMMMM DD, 2024, which is hereby incorporated in its entirety by reference.

### Background of the Invention

### Field of the Invention

The present disclosure relates to a method for molding a hollow molded article, a stretching rod and an injection stretch blow molding machine used in the method.

### Description of Related Art

Injection stretch blow molding machines have been used to produce hollow molded articles such as synthetic resin bottles and cups.

For example, the injection stretch blow molding machine described in Japanese Patent No. 7039089 includes an injection molding section, a blow molding section, and an ejection section. The injection molding section is configured to injection mold a preform with a molten resin injected from an injection apparatus. Herein, the preform is an intermediate molded article for a hollow molded article. The blow molding section is configured to blow mold the preform, which has been injection molded in the injection molding section, into a desired hollow molded article such as a bottle, a cup, or the like. The ejection section is configured to eject the hollow molded article, which has been blow molded in the blow molding section, to the outside of the molding machine.

Some known injection stretch blow molding machines include a temperature control section configured to adjust the temperature of a preform that has been injection-molded in the injection molding section.

The injection molding section includes an injection molding mold that is constituted of an upper mold that serves as an injection core mold, a lower mold that serves as an injection cavity mold, and a lip mold. The lip mold is configured to support the injection molded preform so that the preform is conveyed from the injection molding section to the blow molding section.

The preform that has been molded in the injection molding section is cooled to harden the surfaces on the outer side and the inner side, and a hard skin layer is formed. The properties such as the formation speed and the hardness of the skin layer depend on the type of resin used as the raw material for the preform. Therefore, a desired container can be molded by adjusting, according to the type of resin, the timing of when the preform is released from the injection molding mold (adjustment of the injection cooling time) and the time period until the preform is blown in the blow molding section.

The blow molding section includes a blow molding mold that is constituted of blow molds composed of split molds and a lip mold that is placed in a manner corresponding with the blow molding section. The blow molding section further includes a stretching rod configured to stretch the preform that has been disposed within the blow molding mold. The stretching rod presses down the side (barrel portion) and bottom portion of the preform, thereby stretching the preform.

Furthermore, the blow molding section includes a blowing unit configured to blow air into the preform where the preform is being stretched by use of the stretching rod. The blowing unit inflates the preform and presses the sides and the bottom of the preform against the inner surface of the blow molding mold to shape the hollow molded article.

The hollow molded article that has been molded in the blow molding section is still supported by the lip mold that constitutes a part of the blow molding mold, is released from the blow molding mold, and is transferred to the ejection outlet.

The hollow molded article that has been moved to the ejection outlet is released from the lip mold by opening of the lip mold and reaches the ejection section. As a result, the hollow molded article located at the ejection section is ejected to the outside of the injection stretch blow molding machine. The lip mold that has released the hollow molded article is then moved to the injection molding section again by rotation of a rotary plate.

In the injection stretch blow molding machine, a preform that has been injection molded in the injection molding section is released from the injection molding mold while being supported by the lip mold, and is transferred to the blow molding section. The preform then positioned in the blow molding section is stretched by the stretching rod while blow air is blown thereinto at the same time to produce a hollow molded article.

The preform that has been injection molded in the injection molding section is cooled to harden the outer surface and the inner surface, thereby forming a hard skin layer. At this time, a core layer, which is a layer sandwiched between the skin layer forming the outer surface and the skin layer forming the inner surface, is still in a high-temperature state, and the resin in the core layer is thus in a molten state.

When the preform conveyed to the blow molding section is in this state, the skin layer is heated by the heat within the core layer, and consequently the skin layer is softened and/or semi-melted and integrated with the core layer. The preform in this state is maintained for a predetermined time (hereinafter, referred to as "intermediate time") until the temperature of the entirety of the preform becomes a temperature suitable for the stretching operation with the stretching rod that presses down and for the blowing with the blow air.

This operation is the same for an injection stretch blow molding machine with a temperature control step. Specifically, after the preform temperature has been adjusted, the preform is maintained for an intermediate time until the temperature of the entirety of the preform becomes a temperature suitable for the stretching operation with the stretching rod that presses down the preform and for the blowing with the blow air.

Then, after the preform has been maintained for an intermediate time, the preform is pressed down and stretched by the stretching rod, and blow air is blown into the preform at the same time, whereby the hollow molded article is blow molded.

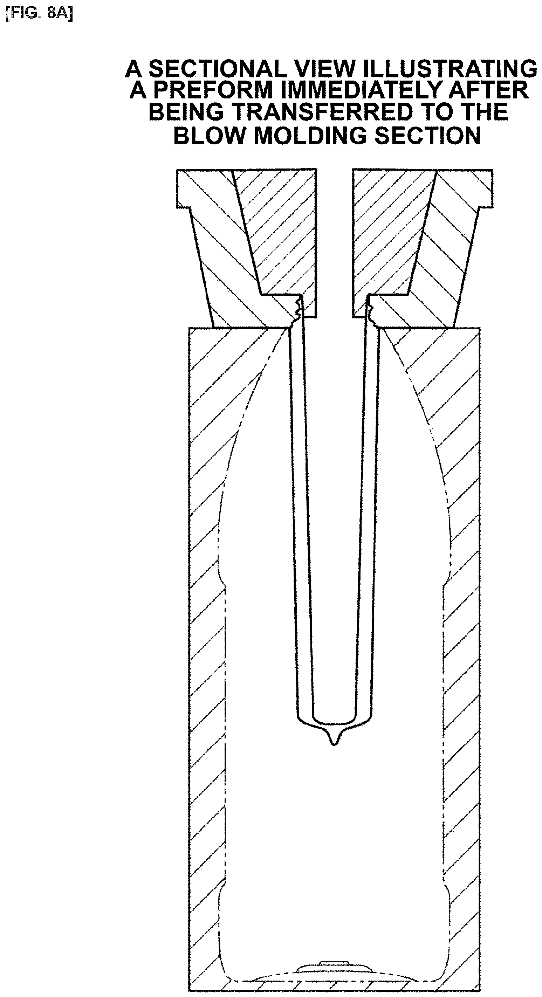

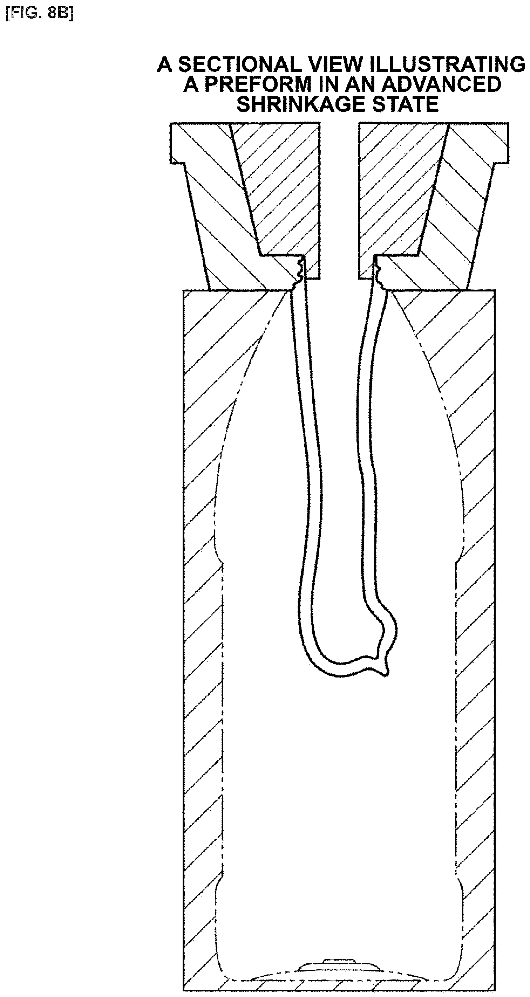

FIGS. 8A and 8B are each a diagram for explaining a deformation state of a preform. FIG. 8A is a sectional view illustrating a preform immediately after being transferred to the blow molding section, and FIG. 8B is a sectional view illustrating a preform in an advanced shrinkage state.

As illustrated in FIG. 8A, the preform immediately after being transferred to the blow molding section retains its initial shape that has been formed by injection molding. However, since, as described above, the skin layer is softened and/or semi-melted and integrated with the core layer, the preform shrinks over time because of residual stress caused by injection, pressure release caused by mold opening, thermal melting, and the like. As a result, as illustrated in FIG. 8B, the shape thereof is deformed compared with the original shape just injection molded.

Here, the intermediate time is determined and set by empirical rules based on the shape, material, molding temperature, cooling temperature, and the like of the preform so that the end point of the intermediate time substantially coincides with a time point (hereinafter, this time point is referred to as a "minimum point") when the preform crystallized skin layer is melted and integrated with the core layer and becomes amorphous.

However, the minimum point varies depending on the thickness of the skin layer. Thus, when the preform is deformed by shrinkage, the thickness of the skin layer increases and the minimum point changes accordingly. Because of this variability, the intermediate time needs to be lengthened further in order to make the end point of the intermediate time coincide with the time point at which the preform reaches the minimum point.

When the deformed preform is stretched by the stretching rod while the blow air is supplied, there arises a problem in that uneven thickness of the hollow molded article, a rupture of the article, and other undesirable effects are generated.

An object of the present disclosure is to provide a method for molding a hollow molded article, which can suppress deformation of a preform and shorten a molding cycle of the hollow molded article, and also to provide a stretching rod and an injection stretch blow molding machine used in the method. Brief Summary of the Invention

An aspect of the present disclosure is a method for molding a hollow molded article, including:
an injection molding process of melting a synthetic resin material and injection molding a bottomed cylindrical preform in an injection molding section; and
a blow molding process of obtaining a hollow molded article by stretch blow molding the preform in a blow molding section, wherein
the blow molding process includes
   a preform supporting step of inserting a distal end portion of a stretching rod into the preform and bringing the distal end portion into contact with the preform to support the preform, and
   a preform separation step of supplying blow air into the preform to release the contact between the preform and the distal end portion.

Another aspect of the present disclosure is a stretching rod for use in the above-described method for molding a hollow molded article, the stretching rod including a rod-shaped portion, and a distal end portion formed continuously to one end portion of the rod-shaped portion, the distal end portion having a peripheral wall portion with the same shape as an inner peripheral wall of the preform.

In the stretching rod according to the other aspect of present disclosure, the distal end portion may have a shoulder portion that extends in a direction perpendicular to an axial line of the rod-shaped portion.

Still another aspect of the present disclosure is an injection stretch blow molding machine including:
an injection molding section configured to melt a synthetic resin material and injection mold a bottomed cylindrical preform with the molten synthetic resin material;
a blow molding section configured to stretch and blow mold the preform while a stretching rod is extended to mold a hollow molded article; and
an ejection section configured to eject the hollow molded article to the outside of the machine, wherein
the blow molding section performs a blow molding process including
a preform supporting step of inserting a distal end portion of the stretching rod into the preform and bringing the distal end portion into contact with the preform to support the preform, and
a preform separation step of supplying blow air into the preform to release the contact between the preform and the distal end portion.

### Effect of the Invention

According to one of the aspects of the present disclosure, the blow molding process can include a preform supporting step of inserting a distal end portion of a stretching rod into a preform and bringing the distal end portion into contact with the preform to support the preform, and a preform separation step of supplying blow air into the preform to release the contact between the preform and the distal end portion. Thus, the preform disposed in the blow molding section can be supported by the distal end portion until the temperature of the entirety of the preform reaches a temperature suitable for the stretching operation with the stretching rod that presses down the preform and for the blowing with the blow air.

As a result, inward shrinkage and deformation of the preform in both the longitudinal direction and the radial direction can be suppressed, and thus a change in the thickness of the skin layer caused by shrinkage of the preform can be suppressed. Therefore, since the skin layer thinness of the preform can be maintained, the time required for the temperature of the entirety of the preform to reach a temperature suitable for the stretching operation with the stretching rod that presses down the preform and for the blowing with the blow air can be shortened. Therefore, it is possible to realize a method for molding a hollow molded article with which deformation of the preform is suppressed and a molding cycle of the hollow molded article can be shortened.

According to the other aspect of the present disclosure, the distal end portion of the stretching rod has a peripheral wall portion with the same shape as the inner peripheral wall of the preform, and thus, the inner peripheral wall, at which the layer thickness is most likely to change can be reliably supported. As a result, deformation of the preform can be suppressed, and the molding cycle of the hollow molded article can be shortened.

According to the other aspect of the present disclosure, the distal end portion is provided with a shoulder portion formed to extend in a direction perpendicular to the axis of the rod-shaped portion. With this configuration, when the blow air is supplied, air pressure can be applied in a direction in which the preform and the distal end portion are separated from each other. Therefore, even when the preform is supported with the distal end portion, the preform and the distal end portion can be separated from each other, so that it is possible to suppress a decrease in yield of the hollow molded article.

According to the other aspect of the present disclosure, since the injection stretch blow molding machine performs the preform supporting step and the preform separation step, an injection stretch blow molding machine capable of suppressing deformation of preforms and shortening the molding cycle of the hollow molded articles can be provided.

### Brief Description of the Drawings

These and other characteristics, features, and advantages of the present disclosure will become clear from the following description with reference to the accompanying drawings, wherein:
FIG. 1 is a schematic plan view of an injection stretch blow molding machine 1;
FIG. 2 is a front view of the injection stretch blow molding machine 1;
FIG. 3 is a schematic sectional view illustrating the inside of a blow molding mold during a blow molding process;
FIG. 4 is a longitudinal sectional view illustrating a stretching rod;
FIGS. 5A and 5B are each a flowchart for explaining a blow molding process, FIG. 5A is a flowchart of a blow molding process according to a conventional art, and FIG. 5B is a flowchart of a blow molding process according to an embodiment of the present disclosure;
FIG. 6 is an enlarged explanatory view illustrating the vicinity of a shoulder portion 23 in step S12;
FIG. 7 is a diagram for explaining a comparative example using a conventional stretching rod; and
FIGS. 8A and 8B are each a diagram for explaining a deformation state of a preform, FIG. 8A is a sectional view illustrating a preform immediately after being transferred to a blow molding section, and FIG. 8B is a sectional view illustrating a preform in an advanced shrinkage state.

### Detailed Description of the Invention

A description will now be made below of an injection stretch blow molding machine 1 of the present disclosure with reference to the accompanying drawings in accordance with an embodiment.

### Injection stretch blow molding machine:

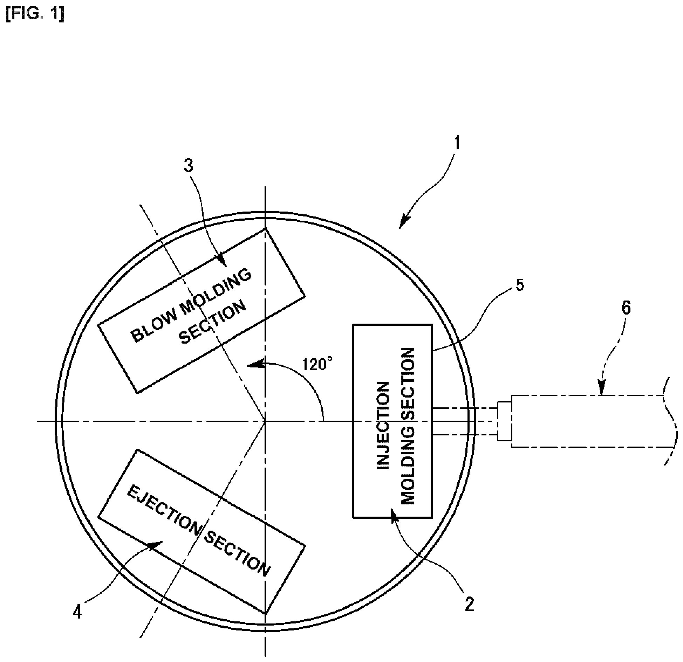

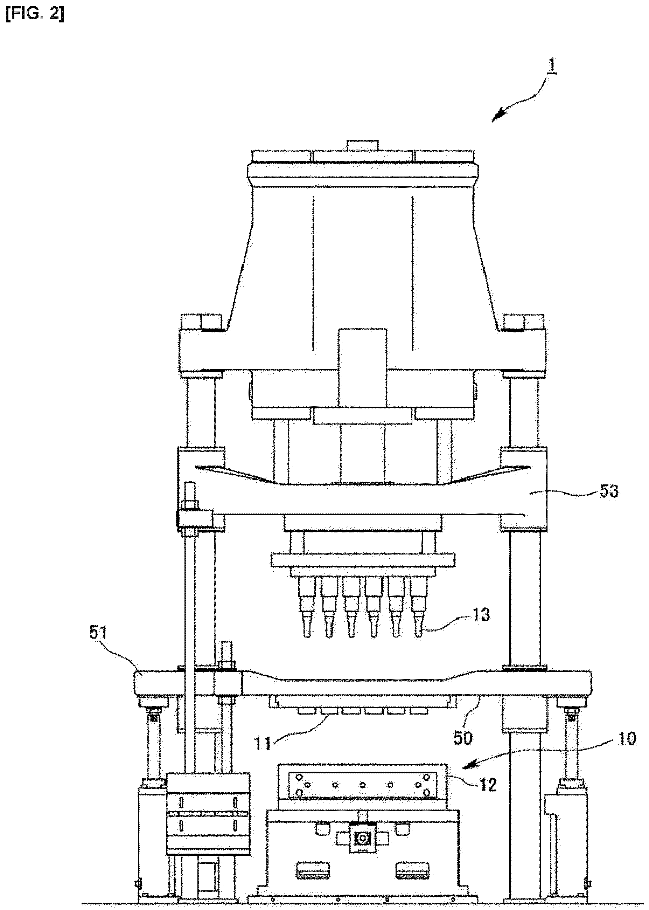

FIG. 1 is a schematic plan view of an injection stretch blow molding machine 1 according to an embodiment of the present disclosure. FIG. 2 is a front view of the injection stretch blow molding machine 1. The entire configuration of the injection stretch blow molding machine 1 will now be described with reference to FIGS. 1 and 2.

As shown in FIG. 1, the injection stretch blow molding machine 1 according to the present embodiment includes three stations including an injection molding section 2, a blow molding section 3, and an ejection section 4. The stations of the injection molding section 2, the blow molding section 3, and the ejection section 4 are arranged at circumferential intervals of about 120° from each other.

The injection stretch blow molding machine 1 further includes a hot runner mechanism (not shown) that is provided in the injection molding section 2 and is connected to an injection apparatus 6. Thus, the injection apparatus 6 can feed a molten resin (for example, polyethylene) to the injection molding section 2. In the present disclosure, examples of the preferable resin include olefin-based resins such as polyethylene, polypropylene, and the like.

The injection stretch blow molding machine 1 further includes a rotary plate 50 that is disposed above the respective stations and that is configured to transfer preforms or hollow molded articles to the next corresponding station. The rotary plate 50 is provided in an intermediate base plate 51, and is stopped for a predetermined period of time when reaching an upper position of each station.

Lip molds 11 configured to form a lip portion of a preform (and in turn a lip portion of a hollow molded article) are disposed on the lower surface of the rotary plate 50. The lip molds 11 transfer the preform and the hollow molded article to the next corresponding stations by the rotation of the rotary plate 50 while holding the lip portions of the preform and the hollow molded article.

The injection stretch blow molding machine 1 includes a control unit (not shown) configured to control a series of operations. The control unit, for example, has an operation program installed in a storage area (ROM) provided in the control unit and executes the installed operation program to control operations in the injection molding section 2, the blow molding section 3, the ejection section 4, the rotary plate 50, and the like.

In the injection stretch blow molding machine 1, when the injection molding mold provided in the injection molding section 2 is filled with the molten resin, a body portion and a bottom portion of the preform are molded in a cavity mold 12, and a lip portion (neck finish) of the preform is molded within the lip mold 11. After the molding operation of the preform is completed, the lip mold 11 and a core mold 13 are caused to ascend, and the preform with the lip portion held by the lip mold 11 is released from the injection mold. Then, the lip mold 11, which has ascended and reached a predetermined position, is stopped, and the mold opening operation of the injection molding mold is completed.

Next, the rotary plate 50 rotates, so that the lip mold 11 that holds the lip portion of the preform moves toward the blow molding section 3. When the lip mold 11 reaches a position just above the blow molding section 3, the lip mold 11 and the preform that is held by the lip mold 11 decend toward the blow molding section 3. As a result, the preform is transferred to the blow molding section 3.

The preform is thus transferred to the blow molding section 3 and is then stretched an blow molded within a blow molding mold of the blow molding section 3. As a result, a hollow molded article is molded from the preform.

When the molding operation of the hollow molded article is completed, the blow molding mold is opened, and the resulting hollow molded article is released from the blow molding mold. Afterwards, the lip mold 11 ascends while holding the lip portion of the hollow molded article.

The rotary plate 50 then rotates, so that the lip mold 11 that holds the lip portion of the hollow molded article moves toward the ejection section 4. Upon the lip mold 11 reaches a position just above the ejection section 4, the lip mold 11 decends toward the ejection section 4. As a result, the hollow molded article is transferred to the ejection section 4.

When the lip mold 11 reaches the ejection section 4, the holding of the lip portion of the hollow molded article by the lip mold 11 is released, and the hollow molded article falls toward a container outlet (not shown) of the ejection section 4. As a result, the hollow molded article passes through the container outlet and is taken out of the injection stretch blow molding machine 1.

### Molding cycle:

The injection stretch blow molding machine 1 continuously performs, in series, an injection molding process of injection molding a preform in the injection molding section 2, a blow molding process of stretch blow molding the preform, which has been molded in the injection molding process, in the blow molding section 3 into a hollow molded article, and an ejection process of ejecting the hollow molded article, which has been molded in the blow molding process, in the ejection section 4 to the outside of the molding machine 1.

In the injection stretch blow molding machine 1, three lip molds 11 are provided at three respective positions, and the lip molds 11 are configured to correspond to the three positions of the injection molding section 2, the blow molding section 3, and the ejection section 4 at the same time.

The three lip molds 11 are assembled to the rotary plate 50. With this configuration, the rotary plate 50 first rotates by 120 degrees in one direction, stops, and then descends at the time of stoppage. After a molding operation, the rotary plate 50 ascends and is then again rotated by 120 degrees in one direction. In the same manner afterwards, the stopping, descending, and ascending operations are repeated so that the lip molds 11 move to the next corresponding positions in a manner corresponding to the order of the molding cycle.

In the injection stretch blow molding machine 1, the lip molds 11 disposed at three positions are simultaneously moved and shifted to the next corresponding positions, and the molding cycle and the next molding cycle of the hollow molded article are performed in a manner such that the next molding cycle is offset by one process step.

### Stretching rod:

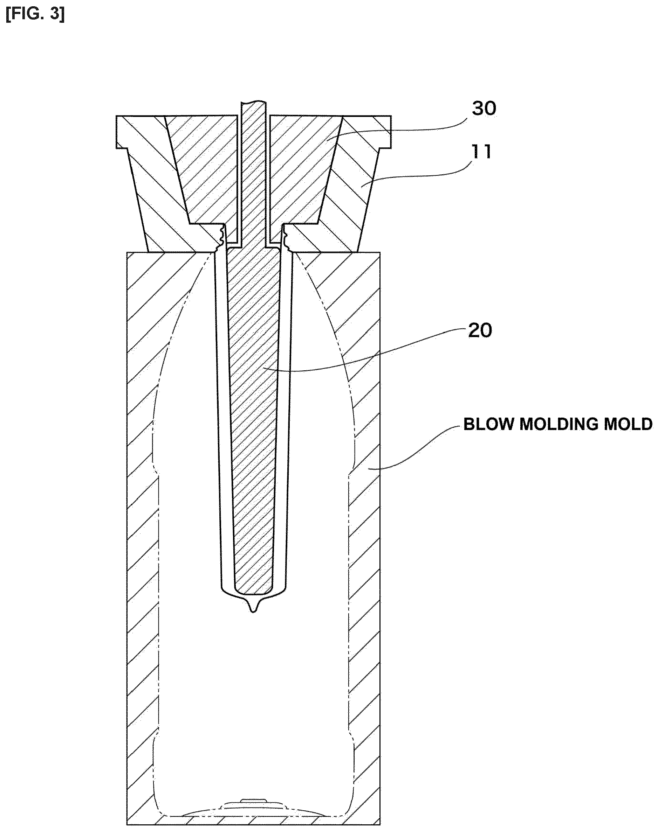

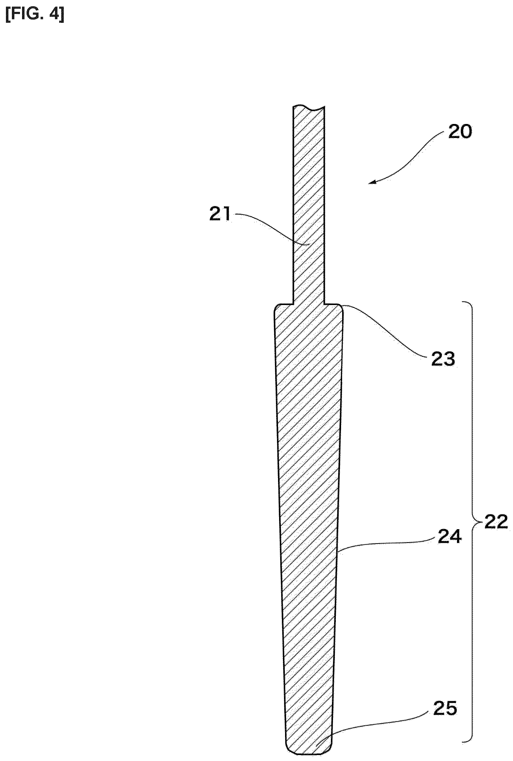

FIG. 3 is a schematic sectional view illustrating the inside of a blow molding mold during the blow molding process. FIG. 4 is a longitudinal sectional view illustrating a stretching rod.

The stretching rod 20 includes a rod-shaped portion 21 extending in its axial direction and a distal end portion 22 connected to one end portion of the rod-shaped portion 21.

The rod-shaped portion 21 is formed in a round rod shape with an axial line that extends straight, and has the other end portion, in terms of the axial direction, inserted into a blow core 30.

The distal end portion 22 includes a shoulder portion 23, a peripheral wall portion 24, and a bottom portion 25. The shoulder portion 23 is continuous with the one end portion of the rod-shaped portion 21 in the axial direction and is configured to expand, from the axial line, radially outward (a direction away from the axial line). The peripheral wall portion 24 is continuous with the shoulder portion 23 and extends toward one side in the axial direction. The bottom portion 25 is continuous with one end portion of the peripheral wall portion 24 in the axial direction.

Specifically, the shoulder portion 23 is formed in the circumferential direction of the axial line while extending outward perpendicularly from the axial line. As illustrated in FIG. 3, in a state in which the stretching rod 20 is inserted into the preform, the shoulder portion 23 is configured to be located at or near a position at which the shoulder portion 23 forms a coinciding horizontal plane together with the lower end of the lip portion of the preform.

Further, in the present disclosure, "formed in the circumferential direction of the axial line while extending outward perpendicularly from the axial line" also includes a case where the shoulder portion 23 is formed in the circumferential direction of the axial line while extending outward at an inclination of about ±5 degrees with respect to the axial line.

The peripheral wall portion 24 is a substantially cylindrical portion continuous with the shoulder portion 23 and extends toward one side in the axial direction. Furthermore, the peripheral wall portion 24 has the same shape as the inner peripheral wall of the preform. The preform of the present embodiment is formed in a shape in which the inner peripheral wall closes in toward the axial line as the inner peripheral wall approaches the inner bottom formed on the side opposite to the lip portion, and so the peripheral wall portion 24 is formed in a shape parallel to the inner peripheral wall. In other words, the peripheral wall tapers toward the axial line as it progresses toward the aforementioned one side in the axial direction.

The shape of the peripheral wall portion 24 is not limited to the above-described shape as long as it is formed in the same shape as the inner peripheral wall of the preform. For example, when the preform has a cylindrical internal space, the peripheral wall portion 24 may be a peripheral wall that forms a cylinder without being tapered. When the preform has an internal space in a quadrangular prism shape or a spherical shape, the shape of the peripheral wall portion 24 may be set so as to be along the inner peripheral wall of the preform.

The peripheral wall portion 24 is preferably shaped such that a slight gap (about 0.1 mm to 2.0 mm) is formed between itself and the inner peripheral wall of the preform. With such a configuration, it is possible to smoothly insert the stretching rod 20 into the preform.

The bottom portion 25 is continuous with one end portion of the peripheral wall portion 24 in the axial direction and has the same shape as the inner bottom shape of the preform.

### Blow molding process:

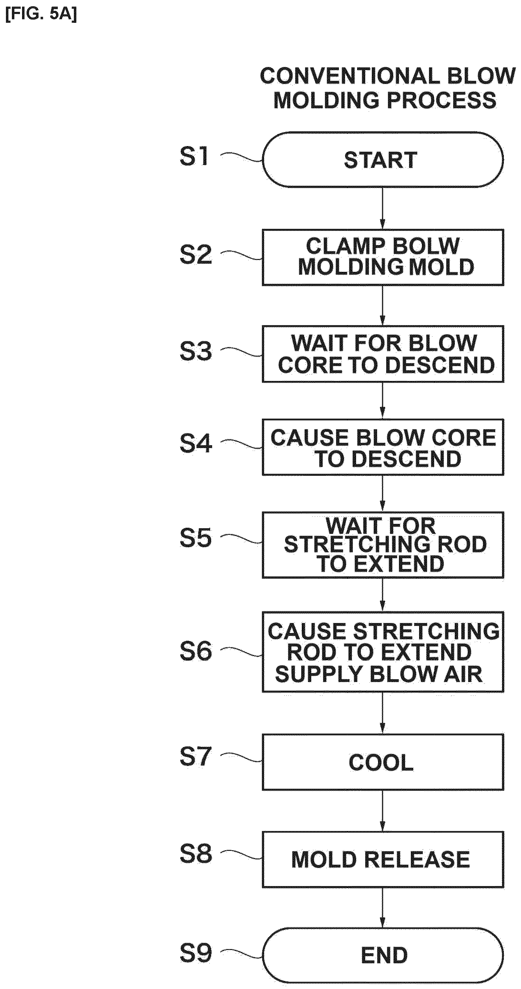

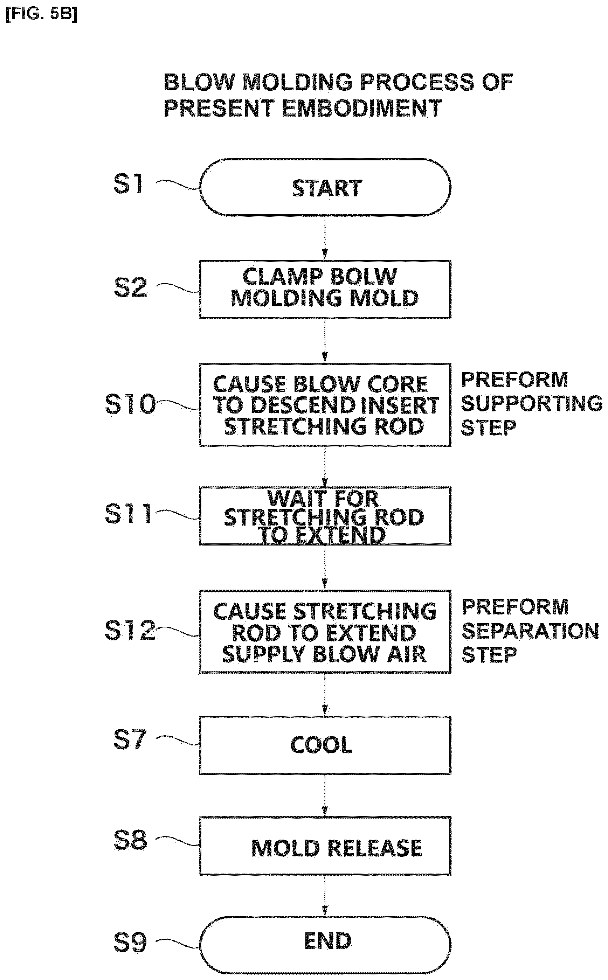

FIGS. 5A and 5B are each a flowchart for explaining the blow molding process. FIG. 5A is a flowchart of the blow molding process according to the conventional art, and FIG. 5B is a flowchart of the blow molding process according to the present embodiment. Hereinafter, the blow molding process of the present embodiment will be described in comparison with the blow molding process of the conventional art.

### Step S1:

The blow molding process according to the conventional art is started from a state where the lip mold 11 is disposed in the blow molding section 3 (step S1). Then, the process proceeds to step S2.

### Step S2:

In step S2, the preform that has been transferred to the blow molding section 3 descends while the lip portion is held by the lip mold 11, and is disposed at a blow position. Then, the blow molding mold is clamped. The process then proceeds to step S3.

### Step S3

In step S3, the process waits until a predetermined blow core descent waiting period T1 elapses. When the blow core descent waiting period T1 has elapsed, the process proceeds to step S4.

### Step S4

In step S4, the blow core 30 descends and is inserted into the lip portion together with the stretching rod 20. At this time, the leading end of the stretching rod 20 is not in contact with the inner bottom of the preform. The process then proceeds to step S5.

### Step S5:

In step S5, the process waits until a stretching rod extension waiting period T2 elapses. When the stretching rod extension waiting period T2 has elapsed, the process proceeds to step S6.

### Step S6:

In step S6, the stretching rod is caused to extend and comes into contact with the bottom of the preform interior to stretch the preform downwards and at the same time blow air is supplied to a flow path of the blow core 30. As a result, the preform is stretched and blown to form the hollow molded article. The process then proceeds to step S7.

### Step S7:

In step S7, the hollow molded article that has been stretched and blow molded is cooled until a predetermined cooling time T3 elapses. The process then proceeds to step S8.

### Step S8:

In step S8, the mold clamping of the blow molding mold is released and the hollow molded article is released. The process then proceeds to step S9.

### Step S9:

In step S9, as the lip mold 11 is caused to ascend, the hollow molded article held by the lip mold 11 also ascends and then is transferred to the ejection section 4. In this manner, the blow molding process is completed.

Since the steps S1, S2 and S7 to S9 in the blow molding process of the present embodiment perform the same operations as those of the blow molding process according to the conventional art, descriptions thereof will be omitted in order to avoid duplication.

### Step S10:

In step S10, the blow core 30 is caused to descend and the distal end portion 22 of the stretching rod 20 is inserted into the interior space of the preform until the bottom portion 25 comes into contact with the bottom of the preform interior. When the distal end portion 22 reaches the bottom of the preform interior, the process proceeds to step S11. In step S10, the preform shrinks so that its inner peripheral wall comes into contact with the peripheral wall portion 24 and is supported by the peripheral wall portion 24. The step of supporting the preform by the peripheral wall portion 24 from its inside, which is performed in step S10, is also referred to as a preform supporting step.

### Step S11:

In step S11, the process waits until a predetermined stretching rod extension waiting period T4 elapses. When the stretching rod extension waiting period T4 has elapsed, the process proceeds to step S12.

### Step S12:

In step S12, the stretching rod 20 is caused to extend and comes into contact with the bottom of the preform interior to stretch the preform downwards and at the same time blow air is supplied to a flow path of the blow core 30. As a result, the preform is stretched and blown to form the hollow molded article. The process then proceeds to step S7. In step S12, the contact between the inner peripheral wall of the preform and the peripheral wall portion 24 is separated by blow air. Thus, step S12 includes a preform separation step.

### Stretching rod extension waiting period T4:

Herein, the stretching rod extension waiting period T4 is set to a time shorter than the stretching rod extension waiting period T2. The reason will be described.

The skin layer of the preform shrinks due to integration with the core layer, residual stress caused by injection, pressure release caused by mold opening, and the like, and the thickness changes depending on the site. In order for the temperature of the entirety of the preform to reach a temperature suitable for the stretching operation with the stretching rod that presses down the preform and for the blowing with the blow air, the preform needs to become amorphous.

However, as described above, when shrinkage of the preform can vary the thickness of the skin layer, the time required for the preform to become amorphous varies depending on the site. Therefore, the time required for the temperature of the entirety of the preform to reach a temperature suitable for the stretching operation with the stretching rod that presses down and the blowing with the blow air is increased. That is, the stretching rod extension waiting period T2 according to the conventional art is set to a time determined while considering a change in the thickness of the skin layer.

In contrast, in the present embodiment, the distal end portion 22 includes the peripheral wall portion 24 that is formed in a shape that is parallel to the inner peripheral wall of the preform. The distal end portion 22 is inserted into the interior space of the preform immediately after step S2 has been completed. When the shrinkage of the preform begins to occur, the inner peripheral wall of the preform comes into contact with the peripheral wall portion 24, so that the internal space of the preform is reinforced by the peripheral wall portion 24.

As a result, inward shrinkage and deformation of the preform in both the longitudinal direction and the radial direction can be suppressed, and thus changes in the thickness of the skin layer caused by shrinkage of the preform can be suppressed. Therefore, the thickness of the skin layer can be maintained substantially equal to that at the time of preform molding.

As a result, the time required for the entirety of the preform to become amorphous can be reduced, so that the time required for the temperature of the entirety of the preform to reach a temperature suitable for the stretching operation with the stretching rod that presses down the preform and for the blowing with the blow air can be shortened. Thus, the stretching rod extension waiting period T4 can be shortened more than the stretching rod extension waiting period T2.

### Shoulder portion 23:

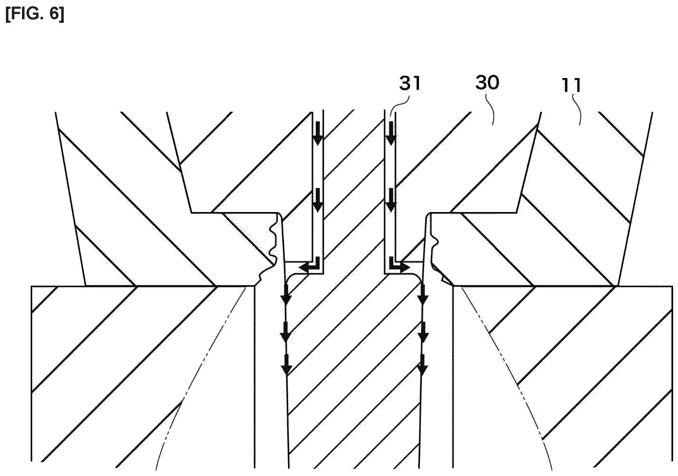

FIG. 6 is an enlarged explanatory view illustrating the vicinity of the shoulder portion 23 in step S12. The shoulder portion 23 is formed in the distal end portion 22 of the stretching rod 20. The shoulder portion 23 is configured to be located at or near a position where the shoulder portion 23 is flush with the lower end of the lip portion (at or near the connection position with the peripheral wall portion of the preform) in a state in which the distal end portion 22 is inserted into the interior space of the preform in step S11.

Since the shoulder portion 23 is provided, the preform is supported by the lip mold 11 and the distal end portion 22, so that a change in the thickness of the skin layer caused by shrinkage can be suppressed.

In step S12, when the blow air is supplied, the blow air flows down through the flow path 31 formed in the blow core 30 and reaches the shoulder portion 23. Since the shoulder portion 23 is formed in the circumferential direction of the axial line while extending outward perpendicularly from the axial line, the traveling direction of the blow air is changed by 90 degrees so that the blow air travels in a direction away from the axial line of the preform. As a result, the inner peripheral wall of the preform that has been in contact with the peripheral wall portion 24 caused by shrinkage is separated off from the peripheral wall portion 24, and a flow path is formed between the inner peripheral wall of the preform and the peripheral wall portion 24.

The blow air travels downward while separating the inner peripheral wall of the preform from the peripheral wall portion 24, reaches the bottom portion, and further expands the preform to shape it into the hollow molded article. The provision of the shoulder portion 23 in this manner can suppress shrinkage of the preform and smoothly separate the preform.

**[Table 1]**

| **Type of Rod / Blow Molding Process** | **Start decent of blow core** | **Start decent of stretching rod** | **Time required until appropriate minimum point is reached in blow molding section** | **Formation** |
|---|---|---|---|---|
| **Conventional stretching rod + Conventional blow molding process** | **3.0 Seconds** | **4.5 Seconds** | **3.0 + 4.5 = 7.5 Seconds** | **Passed** |
| **Conventional stretching rod + Novel blow molding process** | **0 Seconds** | **2.0 Seconds** | **2.0 Seconds (Partly, it did not reach minimum point (deformed))** | **Failed (severe wall thickness variation, rapture)** |
| **Stretching rod of the present disclosure + Novel blow molding process** | **0 Seconds** | **2.0 Seconds** | **2.0 Seconds** | **Passed** |

Table 1 shows comparative results showing a conventional example in which a hollow molded article is formed in a conventional blow molding process, a comparative example in which a blow molding process according to the present disclosure is performed using a conventional stretching rod to form a hollow molded article, and an example in which the blow molding process according to the present disclosure is performed using the stretching rod according to the present disclosure to form a hollow molded article.

In each of the conventional example, the comparative example, and the example, the preform was formed of the same material. Specifically, the preform was molded with polyethylene as a resin material.

### Conventional blow molding process:

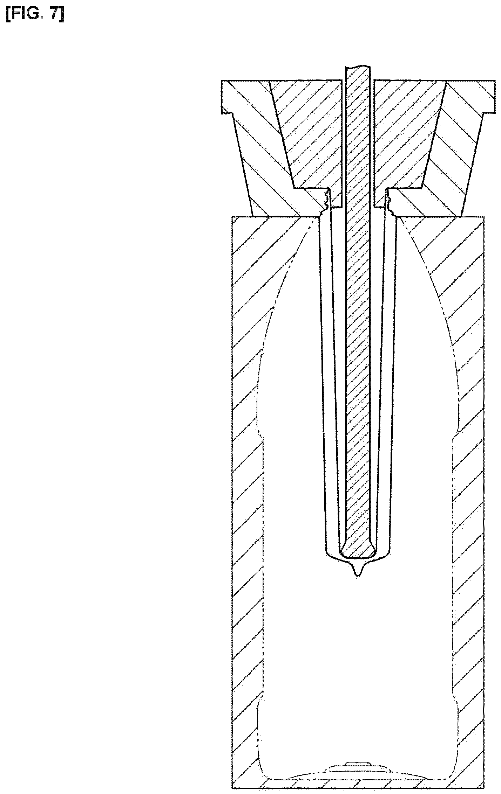

FIG. 7 is a diagram for explaining a blow molding process using a stretching rod according to the conventional art.

The preform that had been injection molded in the injection molding section was transferred to the blow molding section to start the blow molding process. The preform then descended while the lip portion was held by the lip mold 11, and was disposed at the blow position. Then, the blow molding mold was clamped.

The process waited until 3.0 seconds have elapsed as the blow core descent waiting period. After 3.0 seconds had elapsed, the blow core was allowed to descend and was inserted into the lip portion together with the stretching rod.

Next, the process waited until 4.5 seconds have elapsed as the stretching rod extension waiting period. After 4.5 seconds had elapsed, the stretching rod was extended while being in contact with the bottom of the preform interior to stretch the preform downward, and at the same time blow air was supplied to the flow path of the blow core, thereby shaping the hollow molded article.

Then, until a predetermined cooling time has elapsed, the hollow molded article that had been stretched and blow molded was cooled. After that, the clamping of the blow molding mold was released to release the hollow molded article.

Finally, the lip mold ascended and raised the hollow molded article held by the lip mold and then transferred it to the ejection section.

In the blow molding process of the conventional art, the blow core descent waiting period was set to 3.0 seconds and the stretching rod extension waiting period was set to 4.5 seconds, and the time until the time of the preform reaches the minimum point was set to 7.5 seconds (= 3.0 seconds + 4.5 seconds).

By the blow molding process according to the conventional art, 100 hollow molded articles were shaped. The resulting hollow molded articles were visually observed and checked for the presence of rupture portions, or the presence of extremely thin or thick portions (strongly deviated wall). If the hollow molded article having such defects was found, it was rated as "Failed." If no defects were found, it was rated as "Passed." Evaluation results are shown in Table 1.

### Example:

The stretching rod 20 was used to perform the blow molding process according to the embodiment of the present disclosure to form the hollow molded article.

The preform that had been injection molded in the injection molding section was transferred to the blow molding section 3, and the blow molding process was started. The preform then descended while the lip portion was held by the lip mold 11, and was disposed at the blow position. Then, the blow molding mold was clamped. The preform according to the present embodiment was molded using the same material and mold as those for the preform used in the conventional blow molding process described above.

Next, without setting the blow core descent waiting period, the blow core 30 was caused to descend and was inserted into the lip portion together with the stretching rod 20, so that the distal end portion 22 was inserted into the preform to perform the preform supporting step.

Next, the process waited until 2.0 seconds had elapsed as the stretching rod extension waiting period. After 2.0 seconds had elapsed, the stretching rod 20 was extended while being in contact with the bottom of the preform interior to stretch the preform downward, and at the same time blow air was supplied to the flow path of the blow core 30, thereby shaping the hollow molded article.

Then, until a predetermined cooling time (the same time period in the case of the conventional blow molding process) had elapsed, the hollow molded article that had been stretched and blow molded was cooled. After that, the clamping of the blow molding mold was released to release the hollow molded article.

Finally, the lip mold ascended and raised the hollow molded article held by the lip mold and then transferred it to the ejection section 4.

In the present example, the blow core descent waiting period was 0 seconds, the stretching rod extension waiting period was set to 2.0 seconds, and the time until the temperature of the preform reached the minimum point was set to 2.0 seconds (= 0 seconds + 2.0 seconds).

Repeatedly performing the example, 100 hollow molded articles were shaped. The resulting hollow molded articles were visually observed and checked to evaluate whether shaping was "Passed" or "Failed." No rupture, extremely thin, or extremely thick portions were found in any of the hollow molded articles, and the results were good.

Comparative Example in which the blow molding process according to the embodiment of the present disclosure was performed using the conventional stretching rod:

The conventional stretching rod was used to perform the blow molding process according to the embodiment of the present disclosure to form a hollow molded article.

The preform that had been injection molded in the injection molding section was transferred to the blow molding section 3, and the blow molding process was started. The preform then descended while the lip portion was held by the lip mold 11, and was disposed at the blow position. Then, the blow molding mold was clamped. The preform of the comparative example was molded using the same material and mold as those for the preform used in the above-described conventional blow molding process and those used in the example described above.

Next, without setting the blow core descent waiting period, the blow core was caused to descend and was inserted into the lip portion together with the conventional stretching rod, so that the distal end portion of the conventional stretching rod was inserted into the preform to perform the preform supporting step.

Next, the process waited until 2.0 seconds had elapsed as the stretching rod extension waiting period. After 2.0 seconds had elapsed, the conventional stretching rod was extended while being in contact with the bottom of the preform interior to stretch the preform downward, and at the same time blow air was supplied to the flow path of the blow core, thereby shaping the hollow molded article.

Then, until a predetermined cooling time (the same time period in the case of the conventional blow molding process) had elapsed, the hollow molded article that had been stretched and blow molded was cooled. After that, the clamping of the blow molding mold was released to release the hollow molded article.

Finally, the lip mold ascended and raised the hollow molded article held by the lip mold and then transferred it to the ejection section 4.

In the comparative example like in the example, the blow core descent waiting period was set to 0 seconds, the stretching rod extension waiting period was set to 2.0 seconds, and the time until the temperature of the preform reached the minimum point was set to 2.0 seconds (= 0 seconds + 2.0 seconds).

Repeatedly performing the comparative example, 100 hollow molded articles were shaped. The resulting hollow molded articles were visually observed and checked to evaluate whether shaping was "Passed" or "Failed." The resulting hollow molded articles were evaluated as "Failed" because it was found that they included many articles having rupture portions, extremely thin portions or extremely thick portions (uneven wall), and the like. Since rupture and severe wall thickness variation were observed, It is assumed that the preform was stretched and blow molded while its temperature had not partially reached the minimum point. Results of the example and comparative example are shown in Table 1.

### Discussion:

As shown in Table 1, according to the example of the present disclosure, the preform could be successfully shaped into a hollow molded article even when the time required for the temperature of the preform to reach the minimum point was shortened by 5 seconds compared to the conventional blow molding process. Furthermore, as is clear from the results of the comparative example, since the conventional stretching rod without the distal end portion 22 could not suppress changes in the thickness of the preform and thus more time was required for the temperature of the preform to reach the minimum point.

From the above-mentioned results, when the preform supporting step was performed using the stretching rod 20 having the distal end portion 22 with the peripheral wall portion 24 according to the present disclosure, the inner peripheral wall of the preform came into contact with the peripheral wall portion 24, whereby the internal space of the preform was reinforced by the peripheral wall portion 24. As a result, it can be understood that inward shrinkage and deformation of the preform in both the longitudinal direction and the radial direction can be suppressed.

Therefore, according to the present disclosure, changes in the thickness of the skin layer caused by shrinkage of the preform can be suppressed, and thus the thickness of the skin layer can be maintained substantially equal to that at the time of preform molding. As a result, the time required for the entirety of the preform to become amorphous can be reduced, so that the time required for the temperature of the entirety of the preform to reach a temperature suitable for the stretching operation with the stretching rod that presses down and for the blowing with the blow air can be shortened.

It will be apparent to those skilled in the art that various modifications and variations can be made without departing from the spirit or scope of the present disclosure. Thus, it is intended that all such modifications and variations are within the scope of the appended claims and their equivalents. All related art references described above are hereby incorporated by reference in their entirety.
A method for molding a hollow molded article, which can suppress deformation of a preform and shorten a molding cycle of the hollow molded article, and a stretching rod and an injection stretch blow molding machine used in the method are provided. The method for molding a hollow molded article, includes: an injection molding process of injection molding a preform; and a blow molding process of obtaining a hollow molded article by stretch blow molding the preform in a blow molding section. The blow molding process includes a preform supporting step of inserting a distal end portion of a stretching rod into the preform and bringing the distal end portion into contact with the preform to support the preform, and a preform separation step of supplying blow air into the preform to release the contact between the preform and the distal end portion.

## Claims

1. A method for molding a hollow molded article, comprising:
an injection molding process of melting a synthetic resin material and injection molding a bottomed cylindrical preform in an injection molding section; and
a blow molding process of obtaining a hollow molded article by stretch blow molding the preform in a blow molding section, wherein
the blow molding process includes
a preform supporting step of inserting a distal end portion of a stretching rod into the preform and bringing the distal end portion into contact with the preform to support the preform, and
a preform separation step of supplying blow air into the preform to release the contact between the preform and the distal end portion.

2. A stretching rod for use in the method for molding a hollow molded article according to claim 1, the stretching rod comprising a rod-shaped portion, and a distal end portion formed continuously to one end portion of the rod-shaped portion, the distal end portion having a peripheral wall portion with the same shape as an inner peripheral wall of the preform.

3. The stretching rod according to claim 2, wherein the distal end portion has a shoulder portion that extends in a direction perpendicular to an axial line of the rod-shaped portion.

4. An injection stretch blow molding machine comprising:
an injection molding section configured to melt a synthetic resin material and injection mold a bottomed cylindrical preform with the molten synthetic resin material;
a blow molding section configured to stretch and blow mold the preform while a stretching rod is extended to mold a hollow molded article; and
an ejection section configured to eject the hollow molded article to the outside of the machine, wherein
the blow molding section performs a blow molding process including
a preform supporting step of inserting a distal end portion of the stretching rod into the preform and bringing the distal end portion into contact with the preform to support the preform, and
a preform separation step of supplying blow air into the preform to release the contact between the preform and the distal end portion.
